**Europäisches Patentamt**

**European Patent Office**

**Office européen des brevets**

(19)

(11) Veröffentlichungsnummer : **0 143 199**
**B1**

(12)

# EUROPÄISCHE PATENTSCHRIFT

(45) Veröffentlichungstag der Patentschrift :
19.10.88

(21) Anmeldenummer : 84110243.7

(22) Anmeldetag : 29.08.84

(51) Int. Cl.⁴ : **H 01 M 4/96,** H 01 M 4/88,
H 01 M 4/90, H 01 M 4/86

(54) Sauerstoffelektrode für alkalische galvanische Elemente und Verfahren ihrer Herstellung.

(30) Priorität : 02.09.83 DE 3331699

(43) Veröffentlichungstag der Anmeldung :
05.06.85 Patentblatt 85/23

(45) Bekanntmachung des Hinweises auf die Patenterteilung : 19.10.88 Patentblatt 88/42

(84) Benannte Vertragsstaaten :
BE DE FR GB IT NL

(56) Entgegenhaltungen :
DE-A- 1 904 608
DE-A- 1 930 035
DE-A- 1 956 732
DE-A- 2 100 749
DE-A- 2 305 627
US-A- 3 615 847
Die Akte enthält technische Angaben, die nach dem
Eingang der Anmeldung eingereicht wurden und die
nicht in dieser Patentschrift enthalten sind.

(73) Patentinhaber : Accumulatorenwerke Hoppecke Carl
Zoellner & Sohn GmbH & Co. KG
Bontkirchener Strasse 1 Postfach 1140
D-5790 Brilon 2 (DE)

(72) Erfinder : Schmöde, Peter
Karlstrasse 13
D-5790 Brilon (DE)
Erfinder : Katryniok, Detlef, Dr. rer. nat.
Alexanderstrasse 8
D-5790 Brilon (DE)
Erfinder : Ruch, Jean, Dr. Phys.
Am Niederen Tor 12
D-5790 Brilon (DE)

(74) Vertreter : Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11 (DE)

## Beschreibung

Die Erfindung betrifft eine Sauerstoffelektrode für alkalische galvanische Elemente aus einer Kohleschicht, die als zusätzlichen Katalysator Silber enthält, einem in die Kohleschicht zumindest teilweise eingebetteten Stromkollektor aus einem Silber- oder Nickelmetallnetz und einem Trennmittel zur Trennung eines Flüssigkeitsraumes von einem Gasraum, sowie ein Verfahren zum Herstellen einer solchen Sauerstoffelektrode.

Aus der DEA-19 56 732 ist eine derartige Gasdiffusionselektrode für elektrochemische Zellen bekannt. Die bekannte Gasdiffusionselektrode besitzt einen Stromkollektor aus einem Metallnetz, das aus Silber oder Nickel bestehen kann. Dieses Metallnetz ist beidseitig mit einem kohlenstoffhaltigen Material beschichtet, das als zusätzlichen Katalysator Silber enthalten kann. Die gasseitige Schicht ist dabei mit so viel Bindemittel versehen, daß ein Eindringen des Elektrolyten verhindert wird, so daß dadurch eine Trennung eines Flüssigkeitsraumes von einem Gasraum erzielt wird. Ein ebenfalls aus dieser Druckschrift bekanntes Verfahren zur Herstellung einer derartigen Gasdiffusionselektrode sieht vor, zunächst eine Schicht aus kohlenstoffhaltigem Material, einem hydrophoben Bindemittel und gegebenenfalls einem Oxid mit Spinellstruktur auf die eine Seite des Metallnetzes aufzubringen und anschließend die andere Seite des Metallnetzes mit einer zweiten Schicht ebenfalls aus kohlenstoffhaltigem Material, einem hydrophoben Bindemittel sowie mit einem Katalysator beispielsweise aus Silber zu beschichten. Die so aufgebrachten Schichten werden mittels Walzen mit dem Metallnetz unter erhöhten Temperaturen verpreßt.

Bei dieser bekannten Gasdiffusionselektrode ist eine elektrische Leistung bis 200 mA/cm² erreichbar (vgl. Fig. 6).

Davon ausgehend liegt der Erfindung die Aufgabe zugrunde, bei vergleichsweise einfachem konstruktivem Aufbau der Sauerstoffelektrode als Mehrschichtgasdiffusionselektrode in der Gesamtheit ein Leistungsverhalten zu erzielen, welches die Erreichung von folgenden Werten ermöglicht: Im Luftbetrieb unabhängig von der Temperatur 350 mA.cm²; im Sauerstoffbetrieb unabhängig von der Temperatur > 1 A/cm², wobei « unabhängig von der Temperatur » in diesem Fall einen Temperaturbereich von etwa 20 °C bis 80 °C bedeutet. Insbesondere ist es erwünscht, daß das Potential der Sauerstoffelektrode auch unter Belastung über einen längeren Zeitraum hinweg im wesentlichen beibehalten wird. Weiterhin soll ein Verfahren zum Herstellen einer derartigen Sauerstoffelektrode geschaffen werden.

Als technische Lösung wird mit der Erfindung eine Sauerstoffelektrode vorgeschlagen, bei der die Kohleschicht aus 30 bis 40 Gew.-% Kohle, 15 bis 30 Gew.-% Silber, 10 bis 20 Gew.-% Palladium und 20 bis 30 Gew.-% Binder besteht und bei der das Trennmittel eine Trennfolie ist.

Eine derartige Sauerstoffelektrode mit der besonderen Zusammensetzung der aktiven Kohleschicht sowie mit einem Trennmittel in Form einer Trennfolie wird im Vergleich zu der bekannten Gasdiffusionselektrode ein besonders günstiges Potentialverhalten bei gleichmäßig guter Stromableitung erzielt. Insgesamt wird bei einem vergleichsweise einfachen konstruktiven Aufbau der Sauerstoffelektrode ein Leistungsverhalten erzielt, welches im Luftbetrieb unabhängig von der Temperatur 350 mA/cm² und im Sauerstoffbetrieb unabhängig von der Temperatur > 1 A/cm² ergibt. Durch die besondere Zusammensetzung kann das Potential der Sauerstoffelektrode auch unter Belastung über einen längeren Zeitraum hinweg im wesentlichen beibehalten werden. Dabei wurden bisher die besten Ergebnisse mit etwa 36 Gew.-% Kohle, etwa 21 Gew.-% Silber, etwa 17 Gew.-% Palladium und etwa 26 Gew.-% Binder erzielt.

Bei einem praktischen Ausführungsbeispiel liegt der Drahtdurchmesser des Netzes zwischen 0,08 und 0,16, vorzugsweise bei 0,12 Millimeter und die Maschenzahl pro cm² beträgt 150 bis 290, bevorzugt etwa 219.

Die erfindungsgemäße Kohleschicht weist vorzugsweise eine Dicke von 0,2 bis 0,5 mm, bevorzugte 0,3 mm auf. Auf diese Weise beträgt die mittlere Katalysatorbelegung dieser Elektroden 10 bis 11 mg/cm².

Der Binder besteht im allgemeinen aus PTFE (Polytetrafluoräthylen), welches bevorzugt auch als Trennmittel verwendet wird, und zwar dann in Form einer 0,08 bis 2 mm, vorzugsweise 0,14 mm dicken Folie, deren Porosität bevorzugt zwischen 60 und 80 %, insbesondere bei etwa 70 % liegt, wobei die Porengröße erfindungsgemäß zwischen 1 und 100 µm liegen, wobei die Porengrößen für den Sauerstoffbetrieb bevorzugt 5 bis 10 und für den Luftbetrieb 1 bis 15 µm betragen.

Ausgehend von einem Verfahren zum Herstellen einer Sauerstoffelektrode, bei dem die katalysatorhaltige Kohleschicht auf das Metallnetz aufgebracht wird, wobei das Metallnetz zumindest teilweise in die Masse der katalysatorhaltigen Kohleschicht eingebettet wird, wird mit der Erfindung verfahrensmäßig vorgeschlagen, daß eine Katalysatorsalzlösung mit einer wäßrigen Aktivkohlesuspension in einem Ultraschallbed verrührt und nach Reduktion als Katalysatordispersion auf der Aktivkohle abgeschieden wird und daß nachfolgend die Flüssigkeit unter Bildung einer Katalysatormasse abgetrennt wird.

Durch dieses erfindungsgemäße Verfahren zum Herstellen der Sauerstoffelektrode wird eine besonders wirkungsvolle Feinverteilung des Katalysatormetalls, insbesondere des Silbers und des Palladiums, bewirkt. Durch das Verrühren in einem Ultraschallbad stellt sich eine besonders günstige Korngrößenverteilung dahingehend ein, daß eine Verschiebung zu mehr kleineren Körner eintritt, was die wirksame Katalysatoroberfläche vergrößert.

Vorzugsweise wird das Metallnetz vor dem Einbetten aufgerauht.

Wenn gemäß einer Weiterbildung des Verfahrens das Abtrennen dadurch erfolgt, daß die Katalysatordispersion in einen wassergefüllten Sedimentationsbehälter eingeleitet und auf einem Papiervlies sedimentiert wird, ergibt sich hinsichtlich der Korngrößenverteilung ein besonders günstiger Schichtaufbau, bei dem die später abgelagerten Schichten geringere Korngrößen aufweisen.

Insbesondere bei einer im Sedimentationsverfahren hergestellten Katalysatorschicht empfiehlt es sich, das Metallnetz nur in die Oberfläche dieser Katalysatorschicht einzupressen, bis eine ausreichende Haftung zwischen beiden erreicht ist. Dann sind noch etwa 5 bis 30 % der Netzoberfläche nicht mit dem Katalysator umgeben, sondern dem unmittelbaren Kontakt mit dem Elektrolyten des galvanischen Elements ausgesetzt.

Statt einer Abtrennung durch das Sedimentationsverfahren kann alternativ das Abtrennen auch dadurch vorgenommen werden, daß die Katalysatormasse auf das Vlies aufpastiert und unter einem Preßdruck aufgerollt wird, daß anschließend das Netz in die Katalysatormasse aufoder eingepreßt wird, das Vlies sodann abgezogen und die Elektrode bei einer Temperatur zwischen 150 °C und 200 °C getrocknet wird.

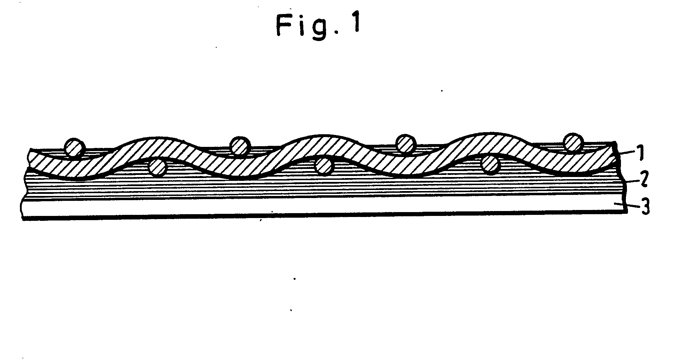

Ein typischer Aufbau einer erfindungsgemäßen Sauerstoffelektrode ergibt sich aus der Fig. 1, in der mit 1 ein als Stromkollektor dienendes, elektrochemisch vorbehandeltes Silbernetz, mit 2 eine getrocknete, poröse Katalysatormasse und mit 3 eine hydrophobe Sperrschicht in Form einer PTFE-Membranfolie bezeichnet ist.

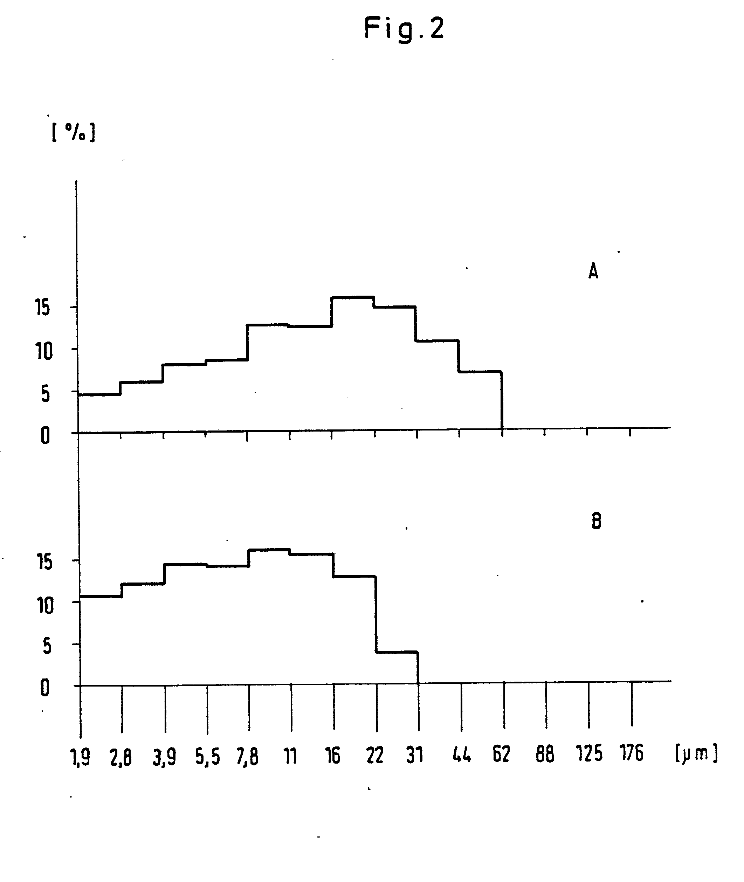

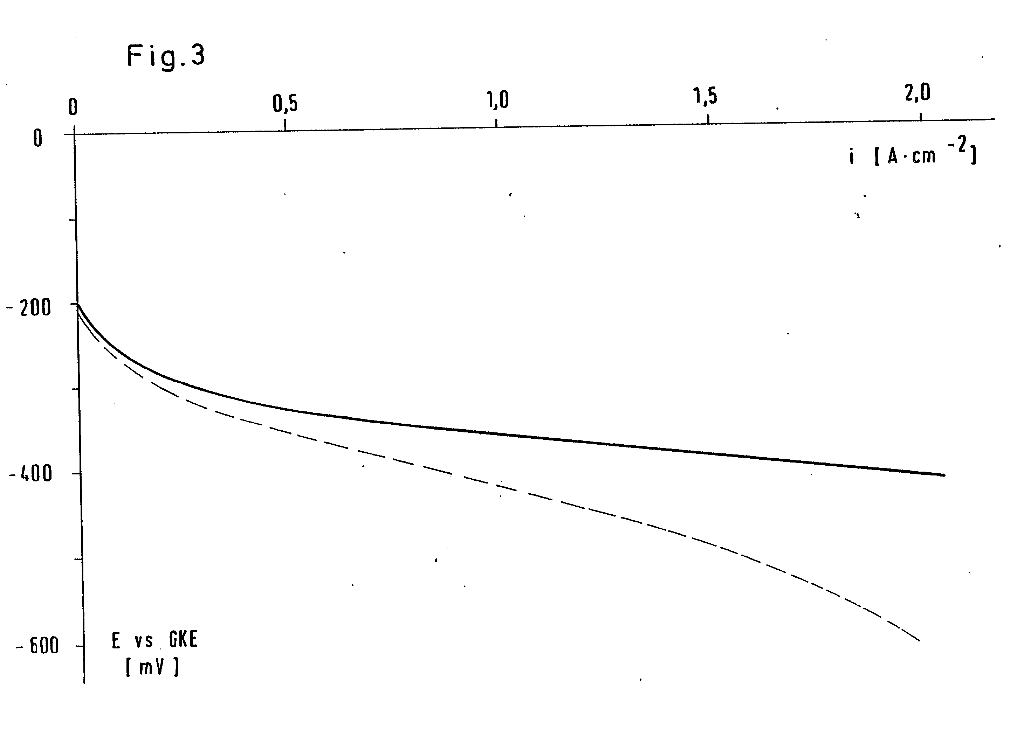

Aus Fig. 2 ergeben sich die Korngrößenverteilungen der Katalysatormasse ohne Ultraschallanwendung während des Verrührens (A) und mit Ultraschallbehandlung während 10 Minuten (B). In Fig. 3 ist das galvanostatisch in einer 6,5 molaren KOH-Lösung bei 60 °C gegen eine gesättigte Kalomelelektrode (CKE) gemessene Potential-Stromdichteverhalten einer erfindungsgemäßen Sauerstoffelektrode dargestellt, wobei die ausgezogene Linie den Potentialverlauf für reinen Sauerstoff und die gestrichelte Linie den Potentialverlauf für atmosphärische Luft darstellt.

Ausführungsbeispiel

Zu einer wässrigen Aktivkohlesuspension, vorzugsweise bestehend aus 20 ml Wasser und 1 ml Alkohol/g Aktivkohle wird eine einem 30 Gew.-% Anteil Silber an einem aus Aktivkohle und Silber bestehenden Basiskatalysator entsprechende Silbernitratmenge, vorzugsweise gelöst in einem gleichen Volumenteil Wasser, hinzugefügt.

Unter Rühren wird die Lösung auf 0 °C abgekühlt und hierdurch die Abscheidung des Silbers auf der Aktivkohle verbessert, da die bei der Reaktion entstehende Wärme sofort abgeführt wird. Die zur Reduktion des Silbernitrates äquivalente Menge Kaliumborhydrid wird als 5 %ige auf 0 °C vorgekühlte Lösung unter Rühren tropfenweise hinzugesetzt. Nach vollendeter Zugabe wird das Reaktionsgemisch noch mindestens 15 min gerührt, anschließend gefiltert und mit heißem destillierten Wasser gewaschen. Die so entstehende Basiskatalysatormasse liegt fest oder als klebriger Puder-Pulver-Kuchen vor und wird anschließend eine Stunde bei 200 °C getrocknet, danach durch Sieben von Körnern größer als 100 μm befreit und unter Rühren durchmischt. Je nach der vorgesehenen Elektrodenzusammensetzung werden nachfolgend die errechneten Gewichtsteile an Basiskatalysator und Katalysatorzusatz vermengt. Durch diesen aus etwa drei Teilen Palladium und einem Teil Silber bestehenden Zusatz wird die Langzeitstabilität des Elektrodenpotentials verbessert. Bei einem Mischungsverhältnis von 70 % des zu 30 % aus Silber bestehenden Basiskatalysators mit 30 Gew.-% des Katalysatorzusatzes aus drei Teilen Palladium und einem Teil Silber ergibt sich eine Zusammensetzung der fertigen Katalysatormasse von 49 Gew.-% Aktivkohle, 28,5 Gew.-% Silber und 22,5 Gew.-% Palladium. Je Gramm dieser Katalysatormasse werden beispielsweise 5 ml Lösungsmittel (Wasser oder Wasser mit bis zu 10 Vol.-% Methanol und Ethanol) hinzugefügt : zur Verminderung der mittleren Korngrößenverteilung und zur Aktivitätssteigerung des Katalysators aufgrund kürzerer Diffusionswege wird dieses Gemenge im Ultraschallbad zu einer gleichmäßigen, breiigen Dispersion verrührt. Hierzu werden 0,6 ml PTFE-Suspension/g Katalysatormasse als Binder hinzugegeben und zu einem pastösen Brei verrührt.

Eine Rohelektrode kann nun dadurch hergestellt werden, daß auf ein Papiervlies, das die Größe und Form der Elektrode hat, die Katalysatordispersion aufgetragen und durch Ausrollen gleichmäßig über das Papiervlies verteilt wird. Es wird aber bevorzugt die pastöse Katalysatordispersion mit Wasser im Verhältnis 1 : 10 verdünnt und mit einem handelsüblichen Dispergator versetzt und zu einer gleichmäßigen Dispersion verrührt. In einem Sedimentationsbehälter befinden sich auf einem Siebträger befestigte Papiervliese, über denen eine Wassersäule von 20 bis 50 cm, vorzugsweise 30 cm, Höhe ruht. Die Katalysatordispersion wird in eine Wanne oberhalb des Wasserniveaus in den Sedimentationsbehälter eingebracht. Nach mechanischem Öffnen der Wanne kann die Dispersion gleichmäßig auf die Wasseroberfläche abfließen. Dann wird das Wasserniveau im Sedimentierbehälter mit vorzugsweise 1 cm Wasserhöhe/min durch einen Wasserabfluß unterhalb des Papiervlieses abgesenkt. Nach Abschluß der Sedimentation werden die Papiervliese mit dem Katalysator vom Siebträger abgenommen und anschließend ein Stromkollektornetz aus Silber mit einer Drahtstärke von 0,12 mm und einer Maschenzahl/cm² von 219 aufgewalzt oder mit 2 kN/cm² während 30 sec aufgepreßt. Danach wird das Papiervlies abgezogen und die Elektrode bei 100 bis 200 °C eine Stunde lang getrocknet. Schließlich wird noch eine 0,14 mm dicke PTFE-Membranfolie auf der dem Metallnetz gegenüberliegenden Seite mit 1 kN/cm² während 15 sec aufgepreßt. Diese Folie ist ein gestrecktes oder mit Gammastrahlen geschossenes Produkt, dessen Porengröße für Luftbetrieb zwischen 1 und 5 und für Sauerstoffbetrieb zwischen 5 und 10 µm liegen.

Bei dem PTFE-Binder für die Katalysatormasse handelt es sich um eine wässrige PTFE-Lösung mit 5 %igem (bezogen auf PTFE) nicht ionischem Dispergiermittel. Bei dem Dispergator, der mit etwa 1 Gew.-% der verdünnten Katalysatordispersion zugegeben wird, handelt es sich um ein Natriumsalz eines Polyacrylamides.

Mit einer derartigen Elektrode, deren Korngrößenverteilung sich aus Fig. 2 (B) ergibt, wurden die in Fig. 3 dargestellten Stromdichte-Spannungskennlinien in einer Halbzellenanordnung ermittelt, bei der der vortemperierte Elektrolyt durchgepumpt wurde und wobei die Messung galvanostatisch erfolgte. Als Gegenelektrode diente ein Nickelblech, als Bezugselektroden wurden gesättigte Kalomelelektroden verwendet.

Weitere Versuche haben ergeben, daß bei der Verwendung eines Kunststoffbindemittels zur Katalysatormasse eine eigene hydrophobierende Schicht entfallen kann.

Durch eine elektrochemische Vorbehandlung des Kollektornetzes durch Ätzen wurde eine die Kontaktfläche vergrößernde Aufrauhung und verbesserte Haftung zur Katalysatormasse erreicht.

Die erfindungsgemäße Sauerstoffelektrode kann mit Separationspunkten versehen werden, die auf sie aufgeklebt oder mittels einer Lochblechschablone mit dem Vorteil auf sie aufgespachtelt werden, daß bei optimaler Wahl der Lage und Größe der Punkte nur wenig Fläche bedeckt wird, der innere Widerstand gering ist und keine aktiven Teile abgedeckt werden. Hierdurch werden sehr geringe Abstände zur Gegenelektrode erreicht und eine verbesserte Elektrolytströmung erzielt. Auch bei nur wenigen Separationspunkten wird eine ausreichende Kurzschlußsicherheit erzielt. Die Anordnung der Separationspunkte am Kollektornetz erbringt eine Beeinflußbarkeit des Elektrolytdurchflusses.

**Patentansprüche**

1. Sauerstoffelektrode für alkalische galvanische Elemente aus einer Kohleschicht, die als zusätzlichen Katalysator Silber enthält, einem in die Kohleschicht zumindest teilweise eingebetteten Stromkollektor aus einem Silber- oder Nickelmetallnetz und einem Trennmittel zur Trennung eines Flüssigkeitsraumes von einem Gasraum, dadurch gekennzeichnet, daß die Kohleschicht aus 30 bis 40 Gew.-% Kohle, 15 bis 30 Gew.-% Silber, 10 bis 20 Gew.-% Palladium und 20 bis 30 Gew.-% Binder besteht und daß das Trennmittel eine Trennfolie ist.

2. Sauerstoffelektrode nach Anspruch 1, dadurch gekennzeichnet, daß das Netz (1) einen Drahtdurchmesser von 0,08 bis 0,16 mm und eine Maschenzahl von 150 bis 290 Stück/cm² aufweist.

3. Sauerstoffelektrode nach Anspruch 1 und 2, dadurch gekennzeichnet, daß die Dicke der Kohleschicht 0,2 bis 0,5 mm beträgt.

4. Sauerstoffelektrode nach einem der Ansprüche 1 bis 3, dadurch gekennzeichnet, daß die Trennfolie eine 0,08 bis 2 mm dicke Folie aus PTFE ist.

5. Sauerstoffelektrode nach einem der Ansprüche 1 bis 4, dadurch gekennzeichnet, daß die Folie eine Porosität von 60 bis 80 % und Porengrößen von 1 bis 100 µm besitzt.

6. Verfahren zum Herstellen einer Sauerstoffelektrode nach einem der Ansprüche 1 bis 5, bei dem die katalysatorhaltige Kohleschicht auf das Metallnetz aufgebracht wird, wobei das Metallnetz zumindest teilweise in die Masse der katalysatorhaltigen Kohleschicht eingebettet wird, dadurch gekennzeichnet, daß eine Katalysatorsalzlösung mit einer wäßrigen Aktivkohlesuspension in einem Ultraschallbad verrührt und nach Reduktion als Katalysatordispersion auf der Aktivkohle abgeschieden wird und daß nachfolgend die Flüssigkeit unter Bildung einer Katalysatormasse abgetrennt wird.

7. Verfahren nach Anspruch 6, dadurch gekennzeichnet, daß das Metallnetz vor dem Einbetten aufgerauht wird.

8. Verfahren nach Anspruch 6 oder 7, dadurch gekennzeichnet, daß das Abtrennen dadurch erfolgt, daß die Katalysatordispersion in einen wassergefüllten Sedimentationsbehälter eingeleitet und auf ein Papiervlies sedimentiert wird.

9. Verfahren nach Anspruch 6 oder 7, dadurch gekennzeichnet, daß das Abtrennen dadurch vorgenommen ist, daß die Katalysatormasse auf das Vlies aufpastiert und unter einem Preßdruck aufgerollt wird, daß anschließend das Netz in die Katalysatormasse auf- oder eingepreßt wird, das Vlies sodann abgezogen und die Elektrode bei einer Temperatur zwischen 150 °C und 200 °C getrocknet wird.

**Claims**

1. An oxygen electrode for alkaline galvanic cells comprising a carbon layer containing silver as an additional catalyst, a current collector made of silver or nickel metal netting and at least partly embedded in the carbon layer, and a separating agent for separating a liquid space from a gas space, characterised in that the carbon layer comprises 30 to 40 wt.% carbon, 15-30 wt.% silver, 10 to 20 wt.% palladium and 20 to 30 wt.% binder, and the separating agent is a film.

2. An acid electrode according to claim 1, characterised in that the netting (1) is of wire from 0.08 to 0.16 mm in diameter and has 150 to 290 meshes per cm².

3. An oxygen electrode according to claims 1 and 2, characterised in that the thickness of the carbon layer is 0.2 to 0.5 mm.

4. An oxygen electrode according to any of claims 1 to 3, characterised in that the separating film is a 0.08 to 2 mm thick film of PTFE.

5. An oxygen electrode according to any of claims 1 to 4, characterised in that the film has a porosity of 60 to 80 % and a pore size of 1 to 100 μm.

6. A method of manufacturing an oxygen electrode according to any of claims 1 to 5, in which the catalyst-containing carbon layer is applied to the metal netting, the netting being at least partly embedded in the mass of the catalyst-containing carbon layer, characterised in that a catalyst salt solution is agitated with an aqueous active carbon suspension in an ultrasonic bath and, after reduction, is applied as a dispersion on the active carbon, and the liquid is then separated to form a catalyst.

7. A method according to claim 6, characterised in that the metal netting is roughened before embedding.

8. A method according to claim 6 or 7, characterised in that separation is brought about by introducing the catalyst dispersion into a water-filled deposition container and depositing it on a paper mat.

9. A method according to claim 6 or 7, characterised in that separation is brought about by forming the catalyst into a paste on the mat and rolling it on under pressure, after which the netting is pressed on to or in to the catalyst, the mat is withdrawn and the electrode is dried at a temperature between 150 °C and 200 °C.

**Revendications**

1. Electrode à oxygène pour éléments galvaniques alcalins comprenant une couche de charbon contenant de l'argent à titre de catalyseur supplémentaire, un collecteur de courant constitué par un réseau de métal-argent ou nickel-enrobé, tout au moins en partie, dans la couche de charbon et un agent séparateur destiné à séparer une phase liquide d'une phase gazeuse, caractérisé en ce que la couche de charbon est constituée par 30 à 40 % de poids de gaz, 15 à 30 % de poids d'argent, 10 à 20 % de poids de palladium et 20 à 30 % de poids de liant et en ce que l'agent séparateur est une feuille de séparation.

2. Electrode à oxygène selon la revendication 1, caractérisée en ce que le réseau (1) présente des fils d'un diamètre de 0,08 à 0,16 mm et un nombre de mailles de 150 à 290 unités/cm².

3. Electrode à oxygène selon les revendications 1 et 2, caractérisée en ce que l'épaisseur de la couche de charbon va de 0,2 à 0,5 mm.

4. Electrode à oxygène selon une quelconque des revendications 1 à 3, caractérisée en ce que la feuille de séparation est une feuille de PTFE de 0,08 à 2 mm d'épaisseur.

5. Electrode à oxygène selon une quelconque des revendications 1 à 4, caractérisée en ce que la feuille possède une porosité de 60 à 80 et des pores d'une taille allant de 1 à 100 μm.

6. Procédé de fabrication d'une électrode à oxygène selon une quelconque des revendications 1 à 5, d'après lequel la couche de charbon contenant le catalyseur est appliquée sur le réseau de métal et le réseau de métal est enrobé, tout au moins en partie, dans la masse de la couche de charbon contenant le catalyseur, caractérisé en ce qu'une solution saline de catalyseur est brassée avec une solution aqueuse de charbon activé dans un bain à ultra-sons, puis se dépose, après réduction, sur le charbon activé, sous forme d'une dispersion de catalyseur et en ce que le liquide est ensuite séparé en constituant une masse de catalyseur.

7. Procédé selon la revendication 6, caractérisé en ce que le réseau de métal est rendu rugueux avant son enrobage.

8. Procédé selon la revendication 6 ou 7, caractérisé en ce que la séparation est effectuée de telle sorte que la dispersion de catalyseur est dirigée sur un réservoir de sédimentation rempli d'eau et que la sédimentation s'effectue sur une nappe de papier.

9. Procédé selon la revendication 6 ou 7, caractérisé en ce que la séparation s'effectue de telle sorte que la masse de catalyseur forme une pâte sur la nappe et est étendue sur celle-ci par pression ou enfoncé dans la masse du catalyseur, et que la nappe est alors retirée et l'électrode séchée à une température située entre 150 °C et 200 °C.

## Fig. 1

# Fig.2

Fig.3

E vs GKE
[ mV ]

i [ A · cm $^{-2}$ ]

0 143 199